# EUROPEAN PATENT SPECIFICATION

(11) **EP 3 388 879 B1**
(45) Date of publication and mention of the grant of the patent: **04.11.2020**
(21) Application number: 18161302.7
(22) Date of filing: 12.03.2018
(51) Int. Cl.: G02B 7/10, H04N 5/232, G03B 3/10, G03B 9/02

(54) **LENS BARREL**
OBJEKTIVTUBUS
BARILLET DE L'OBJECTIF

(30) Priority: 14.04.2017 JP 2017080340
(43) Date of publication of application: 17.10.2018
(73) Proprietor: KONICA MINOLTA, INC., Tokyo 100-7015 (JP)
(72) Inventor: Wataru, Kohei, Tokyo, 100-7015 (JP)
(74) Representative: Henkel & Partner mbB

(56) References cited:
- US-A- 5 828 503
- US-A1- 2006 034 594
- US-A1- 2011 149 142

## Description

### BACKGROUND OF THE INVENTION

### 1. Field of the Invention

The present invention relates to a lens barrel. More particularly, the present invention relates to a lens barrel that has a motor-driven focusing function.

### 2. Description of Related Art

Today, faster and faster focusing is sought in taking lenses for digital cameras. In interchangeable lenses for interchangeable-lens camera systems in particular, high-speed AF (autofocus) performance is required. Accordingly, lens barrels are often furnished with, as a driving actuator, a stepping motor composed of a motor head portion and a lead screw portion. The same is true with zooming: examples of lens barrels that achieve motor-driven lens movement are proposed in Patent Documents 1 and 2 identified below.

In the lens barrel disclosed in Patent Document 1, a motor for translatorily driving a movable group and a zooming movable frame is arranged at the subject side of an aperture unit, and its motor head portion (the motor proper) is arranged at the image sensor side. On the other hand, in the lens barrel disclosed in Patent Document 2, a focusing motor for translatorily driving a movable group and a focusing lens holding frame is arranged at the subject side of an aperture unit, and its motor head portion is arranged at the subject side.
Patent Document 1: Japanese Patent Application published as No. 2009-151038
Patent Document 2: Japanese Patent Application published as No. 2013-195900

With a configuration like that of the lens barrel disclosed in Patent Document 1, the motor head portion is arranged at a position farther away from the optical axis than the aperture unit, and this gives the lens barrel a large exterior diameter. On the other hand, with a configuration like that of the lens barrel disclosed in Patent Document 2, where the motor head portion is arranged at the subject side, in particular in the case of a wide-angle lens system, where lens diameters at the subject side of an aperture stop tend to be large, the arrangement of the motor head portion is subject to tight restrictions. Due to the restrictions, the motor head portion has to be arranged in a direction away from the optical axis, and this makes the lens barrel larger in the radial direction.

US 2006 034594 A1 discloses a collapsible lens barrel which includes a first holding frame for holding a first lens group, a second holding frame for holding a second lens group that is disposed on an image plane side with respect to the first lens group, an actuator for moving the second holding frame in an optical axis direction, and a tubular cam frame including a plurality of cam grooves that are formed at substantially equal intervals around a circumferential direction for moving the first holding frame in the optical direction. The actuator is attached to a portion in the cam frame where the cam grooves are not formed. The first lens group is moved using the cam grooves, and the second lens group is moved using the actuator, so that a faster zooming speed and a lower zooming noise can be achieved.

### SUMMARY OF THE INVENTION

Devised against the background described above, the present invention aims to provide a lens barrel that achieves higher speed in motor-driven lens movement and miniaturization in the radial direction.

According to the present invention the above object is achieved by a lens barrel according to claim 1. The dependent claims are directed to different advantageous aspects of the invention.

### BRIEF DESCRIPTION OF THE DRAWINGS

Fig. 1 is a sectional view showing a schematic configuration of a lens barrel according to one embodiment;
Fig. 2 is a sectional view showing a structure around a motor unit in the lens barrel according to the embodiment;
Fig. 3 is a plan view of a structure around a motor unit as seen from the subject side;
Figs. 4A and 4B are perspective views showing a structure around a motor unit as seen from the subject side;
Figs. 5A and 5B are plan views showing a focusing-related part in a structure around a motor unit as seen from an aperture unit;
Figs. 6A to 6C are perspective views showing a focusing-related part in a structure around a motor unit; and
Figs. 7A and 7B are plan views showing a structure around a motor unit in an infinity-focused state and a closest-focused state respectively.

### DETAILED DESCRIPTION OF EMBODIMENTS

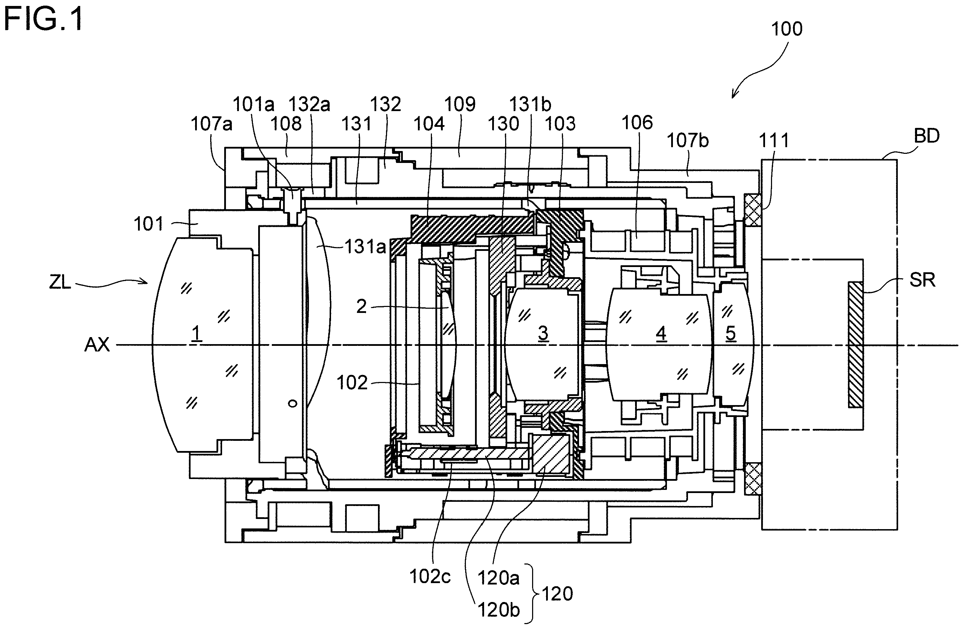

A lens barrel and the like according to one embodiment of the present invention will be described below with reference to the accompanying drawings. Fig. 1 shows a schematic sectional structure of a lens barrel 100. At the imaging side of the lens barrel 100, a lens mount 111 is provided. The lens barrel 100 is configured such that, via the lens mount 111, the lens barrel 100 is coupled mechanically and electrically to a camera body BD incorporating an image sensor SR. The lens barrel 100 is dismountably mounted on the camera body BD, and the lens barrel 100 and the camera body BD combined together constitute a interchangeable-lens camera system.

The lens barrel 100 includes, as a taking lens, a zoom lens ZL comprising five lens groups 1 to 5, and the lens groups 1 to 5 are each composed of one or more lens elements. The lens group 1 is held by a movable barrel 101, and moves along the optical axis AX of the zoom lens ZL during zooming. The lens groups 2 to 5 are held by a movable barrel 103 and a movable barrel 106 fixed to it, and move along the optical axis AX so as to describe loci independent of that of the lens group 1 during zooming. Also held by the movable barrel 103 are a motor unit 120 for moving a movable barrel 102 along the optical axis AX, an aperture unit 130 which constitutes an aperture stop, and the like.

The lens group 2 is a focusing group, and is held by the movable barrel 102 so as to be subordinate to the lens groups 3 to 5. The lens group 2, by being driven by the motor unit 120, moves relative to the lens groups 3 to 5 during focusing and during zooming. The lens group 2 thereby serves to maintain focusing performance as well as optical performance at different zooming positions. The motor unit 120 is composed of a motor head portion 120a, which as a driving source generates a rotative force, and a lead screw portion 120b, which is driven to rotate by the rotative force.

The movable barrel 102 is arranged at the subject side of the aperture unit 130, and in addition is movable along the optical axis AX such that the position of the movable barrel 102 relative to movable barrel 103 is variable. The aperture unit 130 has such a structure that its aperture diameter is variable electrically. The aperture unit 130 is arranged at the imaging side (that is, the image sensor SR side) of the movable barrel 102, and is held by the movable barrel 103 at its subject side.

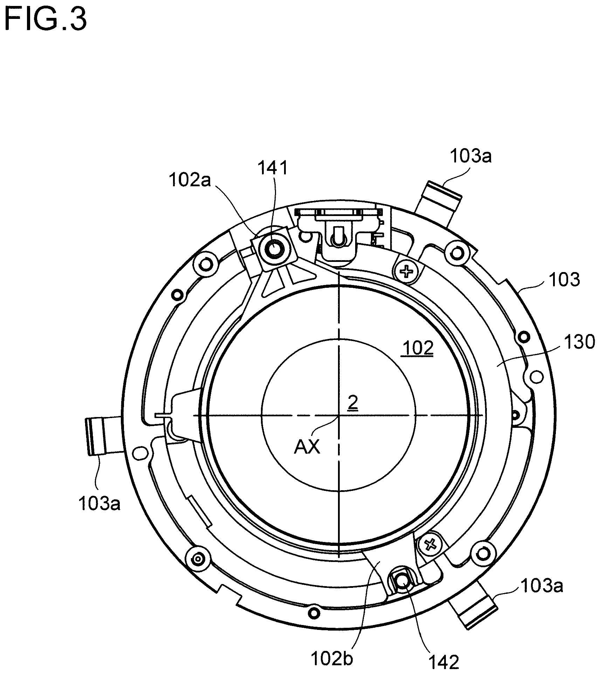

Around the movable barrels 101, 103, and the like, there are provided a translatory barrel 132, which has a translatory groove 132a and the like, and a cam ring 131, which has cam grooves 131a and 131b. The movable barrel 101 has cam followers 101a arranged at three equally spaced places around the circumference, and likewise the movable barrel 103 has cam followers 103a (Fig. 3, etc.) arranged at three equally spaced places around the circumference. The cam followers 101a and 103a engage with the translatory groove 132a and the cam grooves 131a and 131b, and the cam ring 131 fits radially in the translatory barrel 132. Thus, as the cam ring 131 is rotated about the optical axis AX, the cam followers 101a and 103a of the movable barrels 101 and 103 move along the cam grooves 131a and 131b, and thereby zooming is achieved.

Around the translatory barrel 132, a focusing operation ring 108 and a zooming operation ring 109 are provided. The focusing operation ring 108 is rotatable about the optical axis AX relative to the translatory barrel 132. Based on a signal of a photosensor (unillustrated) detected as the focusing operation ring 108 is rotated, the lens group 2, which is the focusing group, can be driven by the motor unit 120 for focusing. The zooming operation ring 109 is rotatable about the optical axis AX relative to the translatory barrel 132. The zooming operation ring 109 is configured to rotate in coordination with the cam ring 131 via a zoom coordination pin (unillustrated), and as the zooming operation ring 109 is operated to rotate, the cam ring 131 rotates to achieve zooming.

At the subject side of the focusing operation ring 108, a front exterior barrel 107a is provided, and at the imaging side of the zooming operation ring 109, a rear exterior barrel 107b is provided. The exterior barrels 107a and 107b serve to prevent the focusing operation ring 108 and the zooming operation ring 109 from dropping off, and also form the exterior of the lens barrel 100.

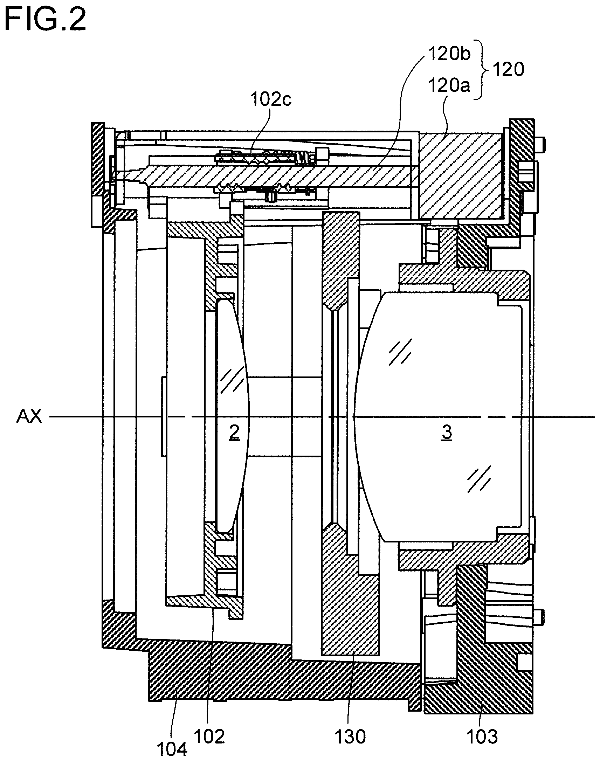

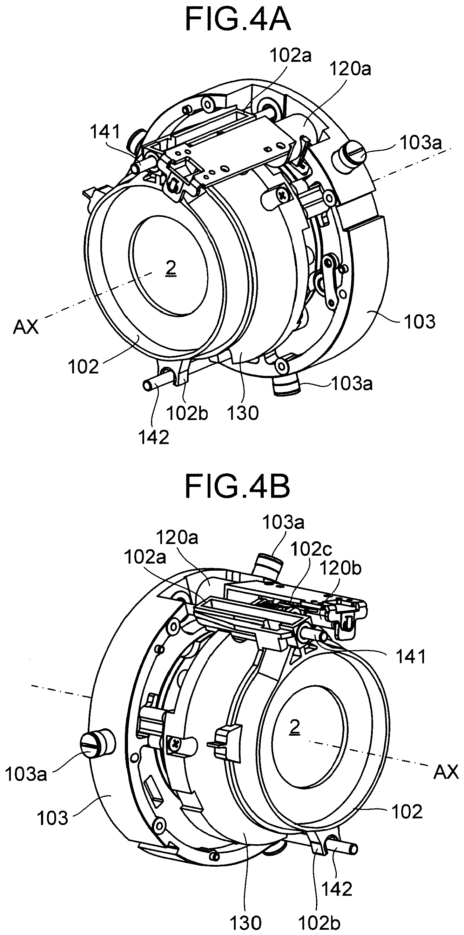

Next, the structure of the lens barrel 100, the structure around the movable barrel 102 and the motor unit 120 in particular, will be described in detail. Fig. 2 schematically shows a sectional structure around the motor unit 120 in the lens barrel 100, and Figs. 3, 4A, and 4B show an exterior structure around the motor unit 120. Although, in Fig. 2, the motor unit 120 is shown in an arrangement different than in Fig. 1, the two arrangements are symmetrical about the optical axis AX, and thus the structure shown here is the same as that shown in Fig. 1. Fig. 3 shows the exterior appearance of the structure around the motor unit 120 as seen from the subject side along the optical axis AX, and Figs. 4A and 4B show the exterior appearance as seen from two subject-side directions (such that the optical axis AX runs in mutually perpendicular directions). In Figs. 3, 4A, and 4B, a stationary barrel 104, the movable barrel 106, and the like are omitted from illustration.

As shown in Figs. 4A and 4B, the movable barrel 102 has a main guide rod engagement portion 102a and a sub guide rod engagement portion 102b, which engage with a main guide rod 141 and a sub guide rod 142 respectively so as to be translatorily movable. The main guide rod engagement portion 102a has an engagement length along the optical axis AX, and suppresses the inclination of the movable barrel 102 by reducing the radial-direction play with respect to the main guide rod 141. That is, the main guide rod 141 and the main guide rod engagement portion 102a together keep the movable barrel 102 in proper position. On the other hand, the sub guide rod 142 and the sub guide rod engagement portion 102b suppresses the rotation of the movable barrel 102 about the main guide rod 141. That is, the sub guide rod 142 and the sub guide rod engagement portion 102b together prevent the rotation of the movable barrel 102. Of the opposite ends of each of the main guide rod 141 and the sub guide rod 142, the subject-side end is supported on the stationary barrel 104 and the imaging-side end is supported on the movable barrel 103.

As shown in Figs. 2, 4A, 4B, etc., the movable barrel 102 has a screw engagement portion 102c which is configured as a separate member, and the screw engagement portion 102c engages with the lead screw portion 120b to enable the motor unit 120 to drive the movable barrel 102. The motor head portion 120a is arranged at the image sensor SR side of the aperture unit 130 (see Fig. 2 and the like), and the lead screw portion 120b is arranged such that its opposite ends bridge between the subject side and the image sensor SR side of the aperture unit 130. That is, the lead screw portion 120b is arranged to bridge from the subject side to the imaging side of the aperture unit 130, and the motor head portion 120a is arranged at the imaging side of the aperture unit 130. As shown in Figs. 3, 4A, and 4B, the aperture unit 130 is fastened to the movable barrel 103 with screws.

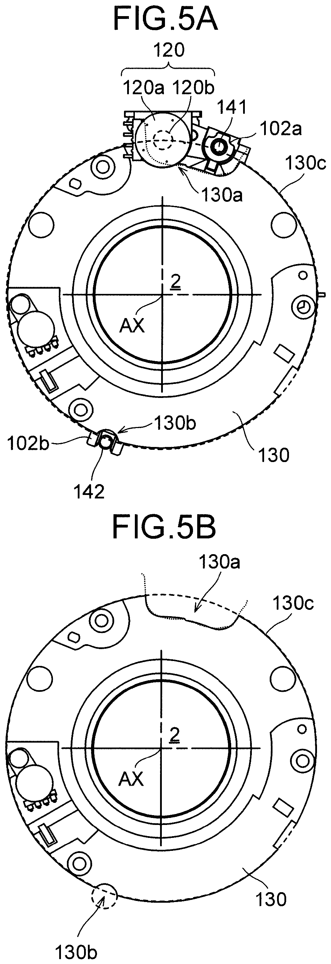

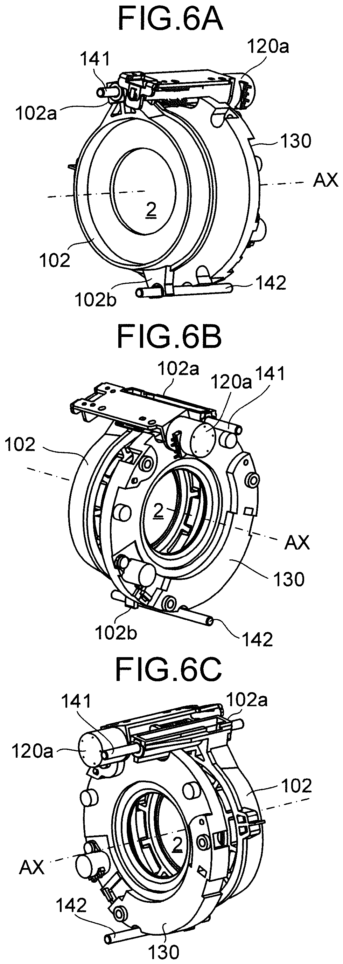

Next, the configuration of a focusing-related part in the structure around the motor unit 120 will be described. Figs. 5A, 5B, and 6A to 6C show the exterior structure of the focusing-related part in the structure around the motor unit 120. Figs. 5A and 5B show the exterior appearance of the focusing-related part as seen from the imaging side along the optical axis AX, Fig. 5B showing the aperture unit 130 alone. Figs. 6A to 6C show, as perspective views, the exterior appearance as seen from three directions (such that the optical axis AX runs in directions at 90° from each other).

As shown in Fig. 5A, an optical axis AX-side part of the motor head portion 120a is located at the optical axis AX side of an outer circumferential portion 130c (broken-line circles in Figs. 5A and 5B) of the aperture unit 130. This permits the motor head portion 120a to be arranged in a space-saving manner in the radial direction about the optical axis AX.

As shown in Fig. 5B, the aperture unit 130 has, in part of its outer circumferential portion 130c, a first cut-off portion 130a that is cut off toward the inner circumference side. As shown in Fig. 5A, on a plane perpendicular to the optical axis AX, in the first cut-off portion 130a are arranged part of the lead screw portion 120b, part of the main guide rod engagement portion 102a, and part of the main guide rod 141. This permits the movable barrel 102 to be driven translatorily in a space-saving manner. Moreover, on a plane perpendicular to the optical axis AX, an optical axis AX-side part of the motor head portion 120a is located at the optical axis AX side of the first cut-off portion 130a. This permits the motor head portion 120a to be arranged in a more space-saving manner in the radial direction about the optical axis AX.

As shown in Fig. 5B, the aperture unit 130 has, in part of its outer circumferential portion 130c, a second cut-off portion 130b that is cut off toward the inner circumference side separately from the first cut-off portion 130a. As shown in Fig. 5A, on a plane perpendicular to the optical axis AX, in the second cut-off portion 130b is arranged part of the sub guide rod 142. This permits the sub guide rod 142 to be arranged in a space-saving manner in the radial direction, and makes it possible to miniaturize the movable barrel 102 in the radial direction.

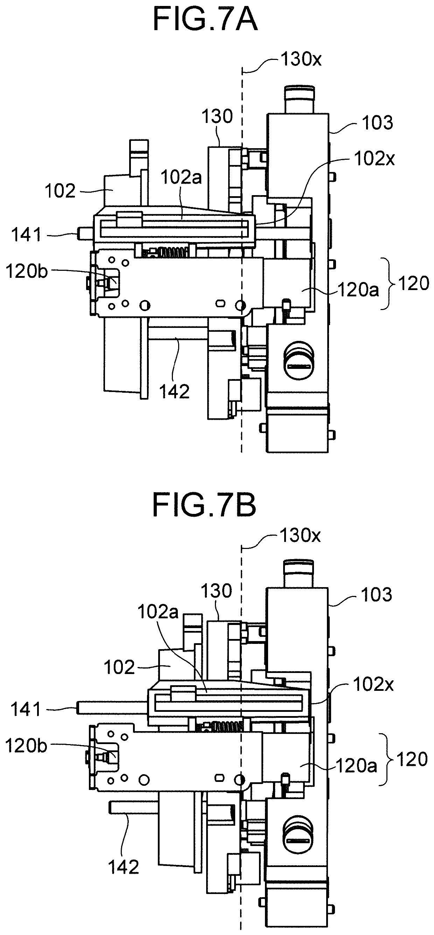

Figs. 7A and 7B show the exterior structure around the motor unit 120 in different focus states at the opposite ends of the focus movement range, respectively, as seen from the motor unit 120 side. Fig. 7A shows the state (infinity-focused state) where the movable barrel 102 has moved to the most subject-side position. Fig. 7B shows the state (closest-focused state) where the movable barrel 102 has moved to the most imaging-side position, in which state the imaging-side end face 102x of the main guide rod engagement portion 102a is in contact with the regulating face of the movable barrel 103.

The longer the engagement length between the main guide rod 141 and the main guide rod engagement portion 102a, the smaller the radial-direction play, and thus the smaller the deterioration in the performance of the zoom lens ZL. As shown in Figs. 7A and 7B, the imaging-side end face 102x of the main guide rod engagement portion 102a is always located, within the movement range of the movable barrel 102, at the imaging side of the imaging-side end face 130x (at the broken-line position) of the outer circumferential portion 130c where the first cut-off portion 130a is provided. This makes it possible to secure a long engagement length of the main guide rod engagement portion 102a with respect to the main guide rod 141. It is thus possible to suppress the inclination of the movable barrel 102 resulting from radial-direction play between the main guide rod engagement portion 102a and the main guide rod 141, and thus to achieve high performance in the zoom lens ZL.

In a lens barrel that includes, as in the embodiment described above, a taking lens, which includes a plurality of lens groups, and a plurality of lens barrels, which hold the lens groups, for example, in a case according to the invention where the focusing group is located at the subject side of the aperture unit, the structure around the motor unit for moving the focusing group along the optical axis is important for miniaturization of the lens barrel. This is not limited to the arrangement relationship between the focusing group and the motor unit, and thus, here, assume the following configuration: the movable barrel 103 is a first barrel; the movable barrel 102 is a second barrel; and the second barrel is arranged at the subject side of the aperture unit and is movable along the optical axis such that the position relative to the first barrel is variable. With this configuration, by ingeniously designing the arrangement of the motor unit which includes the motor head portion and the lead screw portion, it is possible to miniaturize the lens barrel.

As one example of the arrangement of the motor unit for miniaturization of the lens barrel described above, the following configuration is possible: as in the lens barrel 100, the lead screw portion is arranged to bridge from the subject side to the imaging side of the aperture unit, the motor head portion is arranged at the imaging side of the aperture unit, and an optical axis-side part of the motor head portion is located at the optical axis side of the outer circumferential portion of the aperture unit. As to arrangement in the direction along the optical axis, by arranging the motor head portion at the imaging side of the aperture unit, even in a case where the lens elements arranged at the subject side of the second barrel have larger diameters (for example, in the case of a wide-angle lens system), it is possible to arrange the motor unit efficiently. On the other hand, as to arrangement in the radial direction (in the direction perpendicular to the optical axis), by arranging the lead screw portion such that it bridges from the subject side to the imaging side of the aperture unit, and in addition arranging the motor head portion closer to the optical axis side, it is possible to arrange the motor unit efficiently.

Accordingly, with the configuration described above, where the arrangement of the motor unit relative to the aperture unit is set properly, it is possible to achieve higher speed in motor-driven lens movement and miniaturization in the radial direction. For example, in the case of a taking lens in which a focusing group is located at the subject side of an aperture unit, even if it is a wide-angle lens system, where subject-side lens diameters tend to be large, it is possible to miniaturize the lens barrel despite the incorporation of the motor unit in it.

Preferably, as in the embodiment described above, the lens barrel further includes a main guide rod and a sub guide rod which are held by the first barrel and which guide the movement of the second barrel, and the second barrel includes a main guide rod engagement portion which engages with the main guide rod and a sub guide rod engagement portion which engages with the sub guide rod. With this configuration, it is possible, while keeping the movable barrel in proper position with the main guide rod and the main guide rod engagement portion, to suppress the rotation of the movable barrel with the sub guide rod and the sub guide rod engagement portion. It is thus possible to enhance the optical performance owing to smooth translatory movement of the second barrel.

Preferably, as in the embodiment described above, the aperture unit has, in part of its outer circumferential portion, a cut-off portion in a shape cut off toward the inner circumferential side, and on a plane perpendicular to the optical axis, at least part of the lead screw portion is arranged in the cut-off portion. With this configuration, owing to at least part of the lead screw portion being arranged in the cut-off portion in a shape cut off toward the inner circumferential side, the motor unit is arranged farther at the optical axis side; it is thus possible to arrange the motor unit efficiently.

Preferably, as in the embodiment described above, on a plane perpendicular to the optical axis, at least part of each of the main guide rod and the main guide rod engagement portion is arranged in the cut-off portion. With this configuration, owing to also the main guide rod and the main guide rod engagement portion being arranged in the cut-off portion, it is possible to miniaturize the second barrel in the radial direction.

Preferably, as in the embodiment described above, on a plane perpendicular to the optical axis, an optical axis-side part of the motor head portion is located at the optical axis side of the cut-off portion. With this configuration, it is possible, by arranging the motor head portion closer to the optical axis side, to arrange the motor unit efficiently.

Preferably, as in the embodiment described above, the imaging-side end face of the main guide rod engagement portion is always located, within the movement range of the second barrel, at the imaging side of the imaging-side end face of the outer circumferential portion where the cut-off portion is provided. With this configuration, it is possible to secure a long engagement length of the main guide rod engagement portion with respect to the main guide rod. It is thus possible to suppress the inclination of the second barrel resulting from radial-direction play between the main guide rod engagement portion and the main guide rod, and thus to achieve high performance in taking lenses.

Preferably, as in the embodiment described above, the aperture unit has, in part of its outer circumferential portion, a second cut-off portion in a shape cut off toward the inner circumferential side separately from the cut-off portion, and on a plane perpendicular to the optical axis, at least part of the sub guide rod is arranged in the second cut-off portion. With this configuration, it is possible to arrange the sub guide rod in a space-saving manner in the radial direction, and thereby to miniaturize the second barrel in the radial direction.

## Claims

1. A lens barrel (100) comprising:
a taking lens (ZL) including a plurality of lens groups (1 to 5); and
a plurality of barrels (101, 102, 103, 104, 106) holding the lens groups (1 to 5), wherein
the lens barrel (100) comprises:
a first barrel (103) arranged as one of the barrels;
an aperture unit (130) held by the first barrel (103) and having a variable aperture diameter;
a second barrel (102) arranged as one of the barrels at a subject side of the aperture unit (130) and movable along an optical axis (AX) of the taking lens (ZL) such that a position of the second barrel (102) relative to the first barrel (103) is variable;
the second barrel [102) holding a focusing lens group and
a motor unit (120) for moving the second barrel (102) along the optical axis (AX) for focusing,
the motor unit (120) includes:
a motor head portion (120a) configured to generate a rotative force; and
a lead screw portion (120b) configured to be driven to rotate by the rotative force,
the lead screw portion (120b) is arranged to bridge from a subject side to an imaging side of the aperture unit (130),
the motor head portion (120a) is arranged at an imaging side of the aperture unit (130), and
an optical axis (AX)-side part of the motor head portion (120a) is located at an optical axis (AX) side of an outer circumferential portion (130c) of the aperture unit (130).

2. The lens barrel (100) according to claim 1, further comprising:
a main guide rod (141) and a sub guide rod (142) held by the first barrel (103) and guiding movement of the second barrel (102), wherein
the second barrel (102) includes:
a main guide rod engagement portion (102a) engaging with the main guide rod (141); and
a sub guide rod engagement portion (102b) engaging with the sub guide rod (142).

3. The lens barrel (100) according to claim 2, wherein
the aperture unit (130) has, in part of the outer circumferential portion (130c) thereof, a cut-off portion (130a) in a shape cut off toward an inner circumferential side, and
on a plane perpendicular to the optical axis (AX), at least part of the lead screw portion (120b) is arranged in the cut-off portion (130a).

4. The lens barrel (100), according to claim 3, wherein
on a plane perpendicular to the optical axis (AX), at least part of each of the main guide rod (141) and the main guide rod engagement portion (102a) is arranged in the cut-off portion (130a).

5. The lens barrel (100), according to claim 3 or 4, wherein
on a plane perpendicular to the optical axis (AX), an optical axis (AX)-side part of the motor head portion (120a) is located at an optical axis (AX) side of the cut-off portion (130a).

6. The lens barrel (100), according to any one of claims 3 to 5, wherein
an imaging-side end face (102x) of the main guide rod engagement portion (102a) is always located, within a movement range of the second barrel (102), at an imaging side of an imaging-side end face (130x) of the outer circumferential portion (130c) where the cut-off portion (130a) is provided.

7. The lens barrel (100), according to any one of claims 3 to 6, wherein
the aperture unit (130) has, in part of the outer circumferential portion (130c) thereof, a second cut-off portion (130b) in a shape cut off toward an inner circumferential side separately from the cut-off portion (130a), and
on a plane perpendicular to the optical axis (AX), at least part of the sub guide rod (142) is arranged in the second cut-off portion (130b).

## Patentansprüche

1. Ein Objektivtubus (100) umfassend:
ein Aufnahmeobjektiv (ZL) mit einer Mehrzahl von Linsengruppen (1 bis 5); und
eine Mehrzahl von Trommeln (101, 102, 103, 104, 106), die die Linsengruppen (1 bis 5) halten, wobei
der Objektivtubus (100) umfasst:
eine erste Trommel (103), die als eine der Trommeln angeordnet ist;
eine Blendeneinheit (130), die von der ersten Trommel (103) gehalten wird und einen variablen Blendendurchmesser aufweist;
eine zweite Trommel (102), die als eine der Trommeln an einer Motivseite der Blendeneinheit (130) angeordnet und entlang einer optischen Achse (AX) des Aufnahmeobjektivs (ZL) so beweglich ist, dass eine Position der zweiten Trommel (102) relativ zur ersten Trommel (103) variabel ist;
wobei die zweite Trommel [102) eine Fokussierlinsengruppe hält, und
eine Motoreinheit (120) zum Bewegen der zweiten Trommel (102) entlang der optischen Achse (AX) zur Fokussierung,
wobei die Motoreinheit (120) umfasst:
einen Motorkopfabschnitt (120a), der so konfiguriert ist, dass er eine Rotationskraft erzeugt; und
einen Leitspindelabschnitt (120b), der so konfiguriert ist, dass er durch die Rotationskraft zur Drehung angetrieben wird,
wobei der Leitspindelabschnitt (120b) so angeordnet ist, dass er eine Brücke von einer Motivseite zu einer Abbildungsseite der Blendeneinheit (130) bildet,
der Motorkopfabschnitt (120a) an einer Abbildungsseite der Blendeneinheit (130) angeordnet ist, und
ein Seitenteil des Motorkopfabschnitts (120a) an der optischen Achse (AX) an einer Seite der optischen Achse (AX) an einem äußeren Umfangsabschnitt (130c) der Blendeneinheit (130) angeordnet ist.

2. Der Objektivtubus (100) nach Anspruch 1, weiter umfassend:
eine Hauptführungsstange (141) und eine Sub-Führungsstange (142), die von der ersten Trommel (103) gehalten werden und die Bewegung der zweiten Trommel (102) führen, wobei
die zweite Trommel (102) umfasst:
einen Hauptführungsstangen-Eingriffsabschnitt (102a), der in die Hauptführungsstange (141) eingreift; und
einen Sub-Führungsstangen-Eingriffsabschnitt (102b), der mit der Sub-Führungsstange (142) in Eingriff steht.

3. Der Objektivtubus (100) nach Anspruch 2, wobei
die Blendeneinheit (130) in einem Teil ihres Außenumfangsabschnitts (130c) einen ausgeschnittenen Abschnitt (130a) in einer zu einer Innenumfangsseite hin ausgeschnittenen Form aufweist, und
auf einer Ebene senkrecht zur optischen Achse (AX) mindestens ein Teil des Leitspindelabschnitts (120b) in dem ausgeschnittenen Abschnitt (130a) angeordnet ist.

4. Der Objektivtubus (100) nach Anspruch 3, wobei
in einer zur optischen Achse (AX) senkrechten Ebene mindestens ein Teil der Hauptführungsstange (141) und des Hauptführungsstangen-Eingriffsabschnitts (102a) jeweils in dem ausgeschnittenen Abschnitt (130a) angeordnet sind.

5. Der Objektivtubus (100) nach Anspruch 3 oder 4, wobei
auf einer Ebene senkrecht zur optischen Achse (AX) ein Seitenteil des Motorkopfabschnitts (120a) an der optischen Achse (AX) auf einer Seite des ausgeschnittenen Abschnitts (130a) liegt.

6. Der Objektivtubus (100) nach einem der Ansprüche 3 bis 5, wobei
eine abbildungsseitige Stirnfläche (102x) des Hauptführungsstangen-Eingriffsabschnitts (102a) immer innerhalb eines Bewegungsbereichs der zweiten Trommel (102) an einer Abbildungsseite einer abbildungsseitigen Stirnfläche (130x) des äußeren Umfangsabschnitts (130c) angeordnet ist, wo der ausgeschnittene Abschnitt (130a) vorgesehen ist.

7. Der Objektivtubus (100) nach einem der Ansprüche 3 bis 6, wobei
die Blendeneinheit (130) in einem Teil ihres äußeren Umfangsabschnitts (130c) einen zweiten ausgeschnittenen Abschnitt (130b) in einer zu einer inneren Umfangsseite hin ausgeschnittenen Form, getrennt von dem ausgeschnittenen Abschnitt (130a), aufweist, und
in einer Ebene senkrecht zur optischen Achse (AX) mindestens ein Teil der Sub-Führungsstange (142) im zweiten ausgeschnittenen Abschnitt (130b) angeordnet ist.

## Revendications

1. Barillet d'objectif (100) comprenant :
un objectif de prise (ZL) comportant une pluralité de groupes d'objectifs (1 à 5) ; et
une pluralité de barillets (101, 102, 103, 104, 106) maintenant les groupes d'objectifs (1 à 5), dans lequel
le barillet d'objectif (100) comprend :
un premier barillet (103) agencé en tant que l'un des barillets ;
une unité d'ouverture (130) maintenue par le premier barillet (103) et ayant un diamètre d'ouverture variable ;
un deuxième barillet (102) agencé en tant que l'un des barillets à un côté de sujet de l'unité d'ouverture (130) et mobile le long d'un axe optique (AX) de l'objectif de prise (ZL) de sorte qu'une position du deuxième barillet (102) par rapport au premier barillet (103) soit variable ;
le deuxième barillet (102) maintenant un groupe d'objectifs de mise au point ; et
une unité de moteur (120) pour déplacer le deuxième barillet (102) le long de l'axe optique (AX) pour la mise au point,
l'unité de moteur (120) comporte :
une portion de tête de moteur (120a) configurée pour générer une force rotative ; et
une portion de vis-mère (120b) configurée pour être entraînée pour tourner par la force rotative,
la portion de vis-mère (120b) est agencée pour faire le lien d'un côté de sujet à un côté d'imagerie de l'unité d'ouverture (130),
la portion de tête de moteur (120a) est agencée à un côté d'imagerie de l'unité d'ouverture (130), et
une partie de côté d'axe optique (AX) de la portion de tête de moteur (120a) est située à un côté d'axe optique (AX) d'une portion circonférentielle extérieure (130c) de l'unité d'ouverture (130).

2. Barillet d'objectif (100) selon la revendication 1, comprenant en outre :
une tige de guidage principale (141) et une tige de guidage auxiliaire (142) maintenues par le premier barillet (103) et guidant un déplacement du deuxième barillet (102), dans lequel
le deuxième barillet (102) comporte :
une portion de mise en prise de tige de guidage principale (102a) se mettant en prise avec la tige de guidage principale (141) ; et
une portion de mise en prise de tige de guidage auxiliaire (102b) se mettant en prise avec la tige de guidage auxiliaire (142).

3. Barillet d'objectif (100) selon la revendication 2, dans lequel
l'unité d'ouverture (130) a, dans une partie de la portion circonférentielle extérieure (130c) de celle-ci, une portion découpée (130a) dans une forme découpée vers un côté circonférentiel intérieur, et
sur un plan perpendiculaire à l'axe optique (AX), au moins une partie de la portion de vis-mère (120b) est agencée dans la portion découpée (130a).

4. Barillet d'objectif (100) selon la revendication 3, dans lequel
sur un plan perpendiculaire à l'axe optique (AX), au moins une partie de chacune de la tige de guidage principale (141) et de la portion de mise en prise de tige de guidage principale (102a) est agencée dans la portion découpée (130a).

5. Barillet d'objectif (100) selon la revendication 3 ou 4, dans lequel
sur un plan perpendiculaire à l'axe optique (AX), une partie de côté d'axe optique (AX) de la portion de tête de moteur (120a) est située à un côté d'axe optique (AX) de la portion découpée (130a).

6. Barillet d'objectif (100) selon l'une quelconque des revendications 3 à 5, dans lequel
une face d'extrémité de côté d'imagerie (102x) de la portion de mise en prise de tige de guidage principale (102a) est toujours située à l'intérieur d'une plage de déplacement du deuxième barillet (102), à un côté d'imagerie d'une face d'extrémité de côté d'imagerie (130x) de la portion circonférentielle extérieure (130c) où la portion découpée (130a) est prévue.

7. Barillet d'objectif (100) selon l'une quelconque des revendications 3 à 6, dans lequel
l'unité d'ouverture (130) a, dans une partie de la portion circonférentielle extérieure (130c) de celle-ci, une deuxième portion découpée (130b) dans une forme découpée vers un côté circonférentiel intérieur séparément de la portion découpée (130a), et
sur un plan perpendiculaire à l'axe optique (AX), au moins une partie de la tige de guidage auxiliaire (142) est agencée dans la deuxième portion découpée (130b).
